Europäisches Patentamt

European Patent Office

Office européen des brevets

(19)

(11) Numéro de publication: **0 086 314**
**A1**

(12) **DEMANDE DE BREVET EUROPEEN**

(21) Numéro de dépôt: **82400265.3**

(22) Date de dépôt: **15.02.82**

(51) Int. Cl.³: **F 16 B 2/04**

(43) Date de publication de la demande: **24.08.83**
**Bulletin 83/34**

(84) Etats contractants désignés: **BE DE FR GB IT LU NL SE**

(71) Demandeur: **APPLICATIONS MECANIQUES ET ROBINETTERIE INDUSTRIELLE A.M.R.I. Société anonyme dite:, Les Mercuriales 40, rue Jean Jaurès, F-93176 Bagnolet Cedex (FR)**

(72) Inventeur: **Garrigues, Jean-Claude, Buziet, F-64680 Ogeu-les-Bains (FR)**

(74) Mandataire: **Jolly, Jean-Pierre et al, Cabinet BROT 83, rue d'Amsterdam, F-75008 Paris (FR)**

(54) **Dispositif de serrage, à déplacement de faible amplitude, d'un élément tel qu'un joint d'étanchéité.**

(57) Le dispositif selon l'invention est destiné à un serrage de faible amplitude d'un élément (1) tel qu'un joint d'étanchéite contre un flanc abrupt (2) d'un corps à profil étagé. Il comprend une bride de serrage (6) de section en U à ailes épaisses (7, 8) dans laquelle l'âme (9) joue le rôle d'une articulation souple entre les deux ailes (7, 8). L'aile (7) est munie d'une pluralité de perçages axiaux taraudés (11) dans lesquels viennent se visser des vis de serrage (12) dont les extrémités (13) viennent porter sur la face interne de la seconde aile. L'aile (7) se trouve retenue d'un côté par une butée (14) solidaire du support tandis que, du côté opposé l'aile (8) vient s'appliquer sur l'élément à serrer (1).

L'invention s'applique notamment à l'étanchéité des robinets ou des vannes papillons.

<u>Dispositif de serrage, à déplacement de faible ampli-</u>
<u>tude, d'un élément tel qu'un joint d'étanchéité.</u>

La présente invention concerne un dispositif de serrage, à déplacement de faible amplitude, d'un élément tel qu'un joint d'étanchéité contre un flanc abrupt d'un support à profil étagé.

Elle a plus particulièrement pour objet, mais non exclusivement, un dispositif de serrage du joint d'étanchéité amont/aval d'une vanne ou d'un robinet, qui se trouve placé entre l'obturateur et le corps de ladite vanne ou dudit robinet.

Dans ce cas, le dispositif de serrage a pour fonction d'assurer le maintien du joint sur son support (corps ou obturateur) et de créer l'effort nécessaire à l'obtention de l'étanchéité entre ledit joint et ledit support.

A l'heure actuelle, les dispositifs habituellement utilisés à cet effet sont de deux types.

Le premier type fait intervenir une bride munie de perçages par lesquels passent des vis qui viennent se visser dans le support. L'élément à comprimer se trouve entre la bride et le flanc abrupt du support. Il reçoit l'effort de serrage appliqué par les vis par l'intermédiaire de la bride. Cette solution présente cependant l'inconvénient de nécessiter l'exécution d'une série de taraudages effectuée directement dans le support et une implantation d'un diamètre supérieur à celui du joint. L'opération de taraudage est particulièrement délicate et onéreuse, notamment dans le cas où elle est réalisée sur des pièces de dimensions importantes.

Le second type de dispositif de serrage ne présente pas ces inconvénients. Il se compose de deux brides dont l'une reçoit les vis de serrage et prend appui sur une butée (par exemple un jonc) fixée sur le support, et dont l'autre, poussée par les vis de serrage, vient assurer le serrage sur l'élément à comprimer. Un dispositif de ce genre se trouve décrit dans la demande de certificat

—2—

0086314

d'addition n° 81.00.460, déposée le 13 Janvier 1981, au nom de la Demanderesse. L'inconvénient de cette solution réside dans le fait que, lors du serrage et compte tenu de la répartition des efforts, les pièces sont soumises à des moments importants provoquant des fléchissements nuisibles à l'obtention du serrage recherché.

Ces fléchissements sont actuellement minimisés en choisissant des pièces de grande épaisseur. En conséquence, l'ensemble du dispositif de serrage présente un encombrement axial très important.

L'invention a donc pour but de supprimer tous ces inconvénients. Elle propose une bride de serrage de section en forme de U à ailes relativement épaisses dans laquelle l'âme, plus mince, joue le rôle d'une articulation souple entre les deux ailes. Par ailleurs, l'une de ces deux ailes, désignée la première, comprend une pluralité de perçages axiaux taraudés dans lesquels viennent respectivement se visser des vis de serrage dont les extrémités viennent porter sur la face interne de l'autre aile. Par ailleurs, l'aile de la bride portant les taraudages prend appui sur une butée fixée sur le support, tandis que l'autre aile, désignée la deuxième, vient s'appliquer, par sa face externe, sur l'élément, par exemple le joint à serrer.

Ainsi, la pression exercée par le vissage des vis provoque l'ouverture du U formé par la bride, et la susdite deuxième aile assure la compression de l'élément à serrer.

Selon une autre caractéristique de l'invention, le démontage du dispositif de serrage se trouve facilité en prévoyant sur la première aile de la bride de serrage une pluralité de perçages lisses uniformément répartis autour de la circonférence de la bride, et, sur la seconde aile, une pluralité de perçage taraudés sensiblement coaxiaux aux perçages lisses menagés sur la première aile. Le démontage du dispositif de serrage peut alors s'obtenir en vissant dans les perçages taraudés de la seconde aile de la bride, des vis à tête passant au travers des perçages lisses de la première aile. Ce vissage a pour effet de rapprocher les deux ailes l'une vers l'autre et de faciliter ainsi l'extraction de la butée fixée sur le support, par exemple le jonc.

L'invention s'applique par exemple au serrage d'un élément, par exemple d'un joint, contre la face frontale d'un épaulement d'alésage d'un corps à alésage cylindrique. Dans ce cas, la susdite bride présente une forme circulaire. Sa première aile vient prendre appui sur un jonc logé dans une saignée semi-torique usinée dans l'alésage du corps. La surface de la première aile prenant appui sur le jonc est conique, de manière à assurer le maintien de ce jonc par la composante radiale des efforts de la bride sur le corps.

Par ailleurs, selon une autre caractéristique de l'invention, le choix du rapport des inerties entre les deux ailes est prévu de telle manière que la déformation maximale soit imputée à la première aile et que la deuxième aile qui reçoit la réaction de l'élément à serrer, reste sensiblement plane.

Bien entendu, l'invention ne se limite pas à des dispositifs de serrage circulaires. Elle s'applique également à des dispositifs de serrage linéaires. Dans ce cas, la susdite deuxième aile peut comprendre, en plus, un talon de reprise qui vient prendre appui dans une gorge prévue à la base de la face frontale du corps, de manière à maintenir la bride en état d'équilibre. Le principe de déformation reste cependant semblable à celui des brides circulaires.

Des modes de réalisation de l'invention seront décrits ci-après, à titre d'exemples non limitatifs, avec référence aux dessins annexés dans lesquels :

La figure 1 est une coupe transversale schématique d'un dispositif de serrage d'un élément contre un épaulement d'alésage d'un corps à alésage cylindrique.

Les figures 2 et 3 sont deux coupes transversales schématiques analogues à celle de la figure 1, ces deux coupes permettant d'illustrer le principe du dispositif de serrage selon l'invention.

Les figures 4 et 5 sont également deux coupes axiales schématiques de deux dispositifs de serrage conçus pour deux joints d'étanchéité de type différent, à savoir, un double joint torique flexible (figure 4) et un joint à talon (figure 5).

La figure 6 est une perspective partielle d'un dispositif de serrage linéaire.

La figure 7 est une coupe axiale schématique d'un robinet à papillon.

La figure 8 est un détail, à plus grande échelle du montage du joint d'étanchéité, amont/aval, du robinet à papillon représenté figure 7.

La figure 9 est une vue de face d'une bride équipée de moyens permettant de faciliter son démontage.

La figure 10 est une section selon A-A de la figure 9.

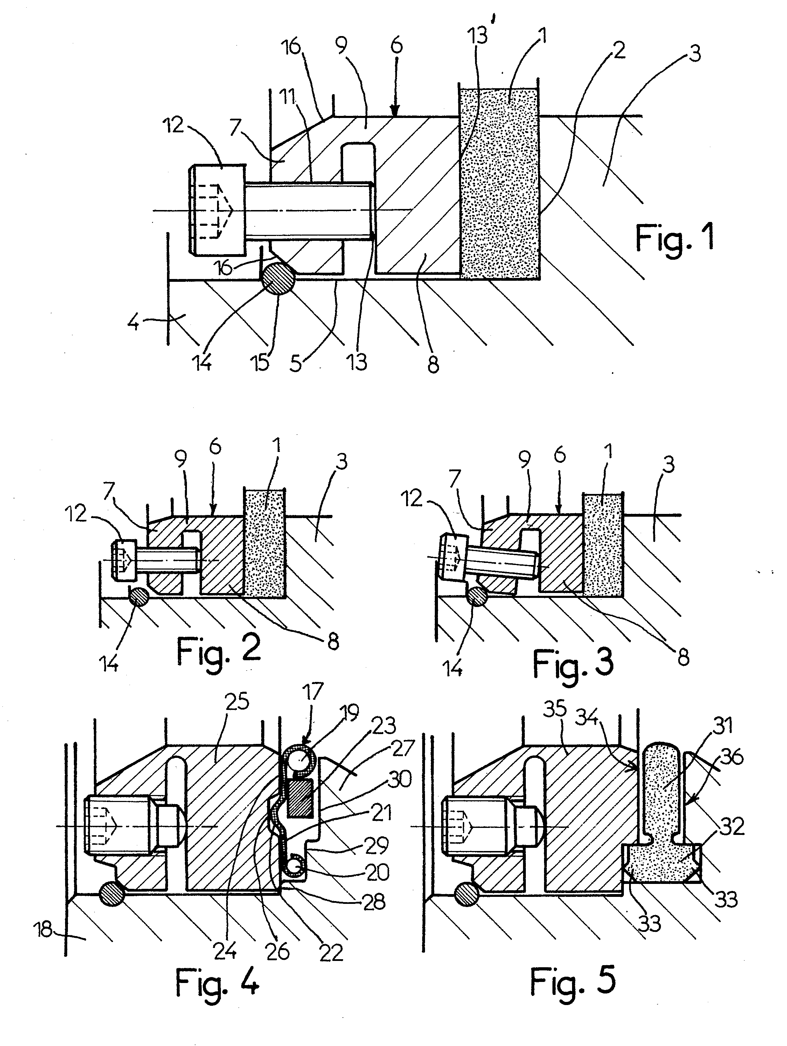

Comme précédemment mentionné, le dispositif représenté (figure 1) sert au serrage d'un élément circulaire 1 en forme de couronne, contre la face frontale 2 d'un épaulement d'alésage 3 d'un corps 4 à alésage cylindrique 5. Il se compose d'une bride circulaire 6 de section en forme de U à ailes épaisses 7, 8, avec une âme relativement mince, et qui présente sa concavité vers la paroi de l'alésage 5.

L'aile 7 de cette bride 6 située du côté opposé à l'épaulement 3 est traversé de part en part par une série de perçages taraudés 11 parallèles à l'axe de l'alésage 5, dans chacun desquels vient se visser une vis 12 dont l'extrémité 13 vient porter sur la face interne de l'aile 8. L'élément à serrer 1 est disposé dans la cavité comprise entre la face extérieure 13' de l'aile 8 et la face frontale 2 de l'épaulement 3.

Par ailleurs, l'aile 7 de la bride vient prendre appui sur un jonc 14 logé dans une saignée semi torique 15 usinée dans l'alésage 5 du corps 4. La surface de l'aile, sur laquelle le jonc 14 vient prendre appui, est conique (chanfrein 16) de manière à assurer le maintien du jonc 14 dans la saignée 15 par la composante radiale des efforts de la bride 6 sur le jonc 14.

Ainsi, en effectuant le serrage des vis 12, on provoque la déformation de la bride 6 qui va légèrement s'ouvrir, l'âme 9 jouant alors le rôle de charnière élastique. Du fait que l'aile 7 se trouve axialement retenue par le jonc 14, l'aile 8 poussée par les vis 12 assure la compression de l'élément 1 sur la face frontale 2 de l'épaulement d'alésage 3 du corps 4 (figure 3).

Comme précédemment mentionné, le choix judicieux des inerties entre les ailes 7 et 8 (l'aile 8 pouvant présenter une largeur supérieure à l'aile 7) permet d'imputer la déformation maximale à l'aile 7, l'aile 8 restant sensiblement plane.

Sur les figures 1 à 3, l'élément à serrer 1 a été représenté, dans un but de généralisation, sous la forme d'une couronne de section rectangulaire et sa fonction, qui peut être variée, n'a pas été précisée. Toutefois, il convient de noter que l'invention s'applique de préférence, au serrage des joints d'étanchéité des vannes ou des robinets placés entre l'obturateur et le corps de ces vannes ou de ces robinets.

La figure 4 représente un dispositif de serrage d'un double joint torique flexible 17 monté dans le corps 18 d'un robinet à papillon. Ce double joint 17 est constitué de deux structures de joint torique 19, 20 liées par une membrane souple 21, de section de révolution en forme de C, dont les deux extrémités viennent en retour sur les deux structures de joint 19, 20 et dont l'âme présente une pliure 22 en forme de V assurant la souplesse entre les deux structures de joint 19, 20.

La structure de joint torique 20 est destinée à assurer une étanchéité statique avec le corps 18 du robinet ou de la vanne, tandis que la structure de joint torique 19 est destinée à assurer l'étanchéité dynamique avec l'obturateur.

Ce double joint torique comprend, en outre, un anneau de réaction 23 destiné à reprendre les efforts de compression du siège d'étanchéité, par exemple de la tranche du papillon et à assurer une répartition homogène des pressions de contact sur toute la circonférence. Cet anneau de réaction 23 est monté serré radialement sur la structure de joint 19, et flottant dans l'intervalle des deux structures de joint 19, 20.

Dans ce cas, la face antérieure 24 de la bride 25 constituant le dispositif de serrage comprend, à mi-hauteur, une gorge circulaire 26 servant à recevoir la pliure en forme de V 22, tandis que la face frontale de l'épaulement d'alésage 27 présente trois paliers, à savoir, un palier inférieur 28 servant à retenir axialement la bride 25, un palier 29 servant à comprimer la structure de joint 20 qui réalise l'étanchéité statique et un palier 30 servant à délimiter, avec la face antérieure 24 de l'aile de la bride 25, une cavité dans laquelle vient partiellement se loger la structure de joint 19 destinée à l'étanchéité dynamique.

Il convient de noter que le dispositif de serrage selon l'invention peut également s'appliquer au serrage d'un joint d'étanchéité sur l'obturateur, par exemple sur le papillon d'une vanne ou d'un robinet à papillon selon un montage sensiblement inverse à celui précédemment décrit, le support consistant en la tranche de l'obturateur.

Dans l'exemple représenté figure 5, le joint utilisé est un joint à talon, de section sensiblement en forme de T inversé, c'est-à-dire comprenant un corps 31 de section rectangulaire raccordé par une portion rétrécie à un talon 32, de section sensiblement rectangulaire flanqué latéralement de deux lèvres 33 en saillie.

Dans ce cas, la face antérieure 34 de la bride 35 et la face frontale 36 de l'épaulement d'alésage présentent des profils en palier permettant de délimiter une cavité en forme de T inversé, sensiblement complémentaire, hormis les nervures 33, à celle du joint 31, 32, 33.

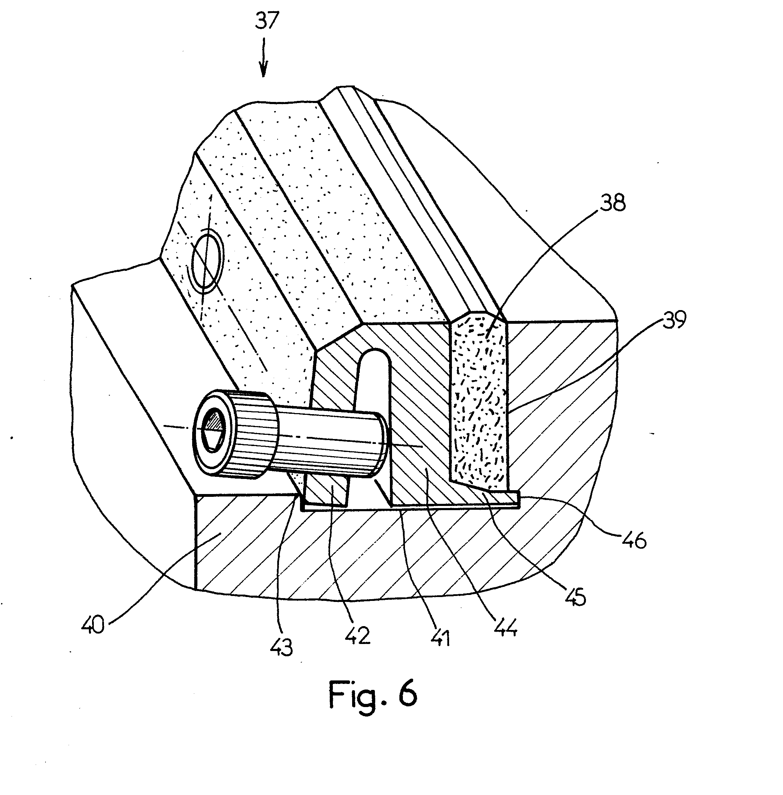

L'invention ne se limite pas à un dispositif de serrage d'un élément circulaire contre la face frontale d'un épaulement d'alésage d'un corps à alésage cylindrique. Elle peut également s'appliquer à des dispositifs de serrage linéaires tels que, par exemple, celui représenté figure 6.

Selon cet exemple de réalisation, la bride linéaire 37, de section similaire à celles précédemment décrites, effectue le serrage d'un élément 38 contre la face frontale 39 d'un corps 40. Elle repose sur une partie plane 41 du corps 40, perpendiculaire à la face frontale 39, et elle est retenue, d'un côté, par la bordure inférieure de son aile 42, par un étagement 43 du corps 40 formant butée. L'aile 44 de la bride 37 qui vient serrer l'élément 38 comprend, au niveau de sa bordure inférieure, un talon de reprise 45 qui s'étend sous l'élément 38 et vient s'engager dans une gorge 46 ménagée à la base de la face frontale 39, ce talon de reprise 45 étant destiné à maintenir la bride 37 en état d'équilibre. Le principe de déformation de la bride 37, analogue à celui des brides circulaires, ne sera donc pas décrit à nouveau.

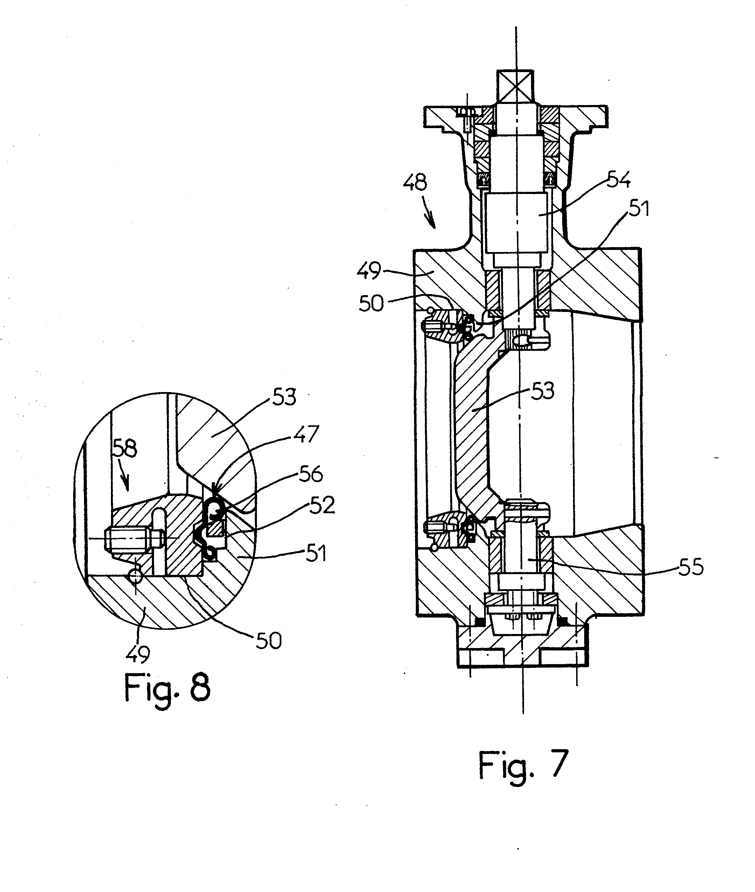

Les figures 7 et 8 représentent un mode d'application de l'invention au serrage d'un double joint torique métallique flexible 47 servant à assurer l'étanchéité amont/aval d'un robinet à papillon 48 comprenant :

- d'une part, un corps 49 à alésage central 50 muni d'un épaulement d'alésage 51 qui présente un flanc abrupt 52 situé dans un plan perpendiculaire à l'axe de l'alésage 50, et,

- d'autre part, un papillon 53 monté pivotant dans le corps 49 (axes 54, 55) qui est destiné à venir porter, en fin de course d'obturation, sur la structure de joint dynamique 56 du double joint 47.

Dans cet exemple de réalisation, le dispositif de serrage 58 du double joint torique 47 est identique à celui représenté figure 4. Il ne sera donc pas décrit à nouveau.

Les avantages du dispositif de serrage selon l'invention apparaissent de façon évidente :

Ce dispositif ne fait intervenir qu'une pièce (bride) de faible encombrement.

Il permet de conserver, après serrage du joint, la planéité de la face d'appui (aile antérieure de la bride).

Il ne nécessite aucun usinage délicat à réaliser dans le corps.

Il ne fait apparaître aucune cavité vers l'intérieur du robinet ou de la vanne (la concavité de la bride est orientée vers l'alésage du corps).

L'ensemble bride de serrage, joint et corps présente, vis-à-vis de l'écoulement, une surface continue régulière évitant toute perturbation importante de l'écoulement.

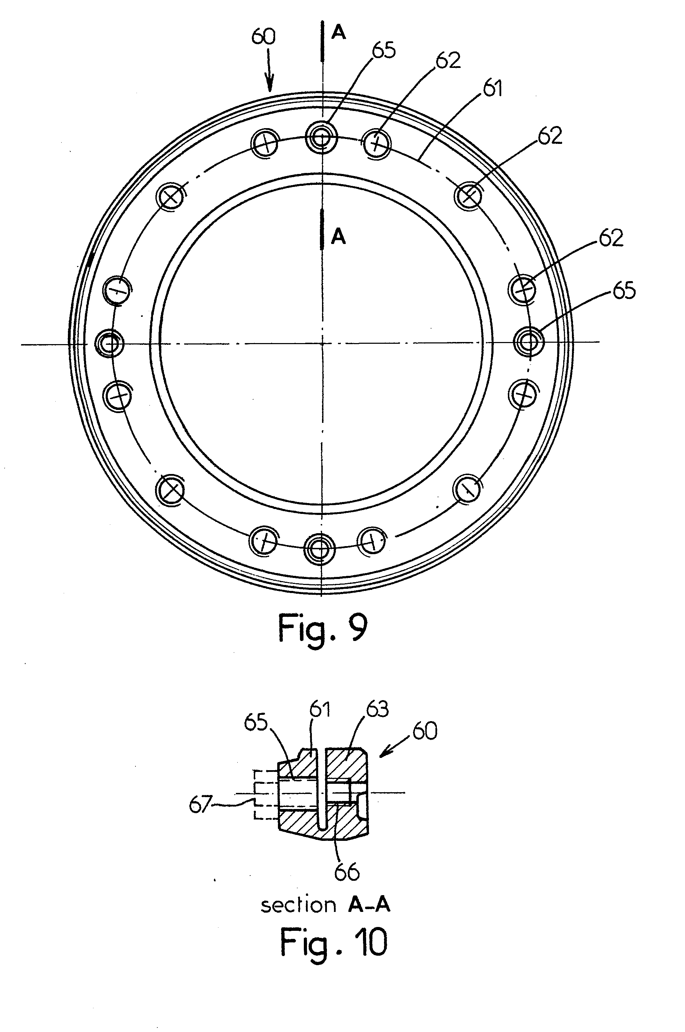

La bride 60 représentée figures 9 et 10 présente une section analogue à celle de la figure 8. D'une façon analogue son aile 61 est munie d'une série de perçages taraudés 62 dans chacun desquels vient se visser une vis dont l'extrémité vient porter sur la face interne de l'aile 63.

L'aile 61 de la bride 60 comprend en outre une série (4 dans l'exemple représenté) de perçages lisses 65 parallèles à l'axe de la bride 60 tandis que l'aile 63 est munie d'une série de perçages taraudés 66, respectivement coaxiaux aux perçages lisses 65.

0086314

Le démontage de la bride 60 s'obtient alors en vissant dans les perçages taraudés 66 des vis à tête 67, dont l'une est représentée en traits interrompus (figure 10), passant par les perçages lisses 65 correspondants.

Ce vissage a pour effet de rapprocher les deux ailes 61, 63, l'une vers l'autre et de faciliter ainsi l'extraction de la butée fixée sur le support, par exemple du jonc 14 utilisé dans les exemples représentés figures 1, 2, 3, 4, 5, 7, et 8.

## REVENDICATIONS

1.- Dispositif de serrage à déplacement de faible amplitude, d'un élément (1) tel qu'un joint d'étanchéité contre un flanc abrupt (2) d'un corps (4) à profil étagé, caractérisé en ce qu'il comprend une bride de serrage (6) de section en forme de U à ailes (7,8) relativement épaisses dans laquelle l'âme (9), relativement mince, joue le rôle d'une articulation souple entre les deux ailes (7,8), en ce qu'une première (7) de ces deux ailes comprend une pluralité de perçages axiaux taraudés (11) dans lesquels viennent respectivement se visser des vis de serrage (12) dont les extrémités (13) viennent porter sur la face interne de la seconde aile (8), et en ce que ladite première aile (7) se trouve axialement retenue d'un côté par une butée (14) solidaire du corps (4), tandis que, du côté opposé, la seconde aile (8) vient s'appliquer, par sa face externe, sur l'élément à serrer (1).

2.- Dispositif de serrage selon la revendication 1, caractérisé en ce que le choix du rapport des inerties entre les deux ailes (7, 8) est prévu de telle manière que la déformation maximale soit imputée à la première aile (7) et que la deuxième aile (8) qui reçoit la réaction de l'élément à serrer, reste sensiblement plane.

3.- Dispositif de serrage selon l'une des revendications 1 et 2, caractérisé en ce que la susdite bride (6) présente une forme circulaire et effectue le serrage d'un élément (1) contre la face frontale (2) d'un épaulement (3) d'un support (4) cylindrique.

4.- Dispositif de serrage selon la revendication 3, caractérisé en ce que ledit support (4) cylindrique est le corps d'une vanne ou d'un robinet, notamment d'une vanne ou d'un robinet à papillon.

5.- Dispositif de serrage selon l'une des revendications 1 à 3, caractérisé en ce que le susdit support cylindrique 4 consiste en l'obturateur d'une vanne ou d'un robinet, notamment d'une vanne ou d'un robinet à papillon.

6.- Dispositif de serrage selon l'une des revendications précédentes, caractérisé en ce que la susdite première aile (7) vient prendre appui sur un jonc (14) logé dans une saignée (15), de préférence semi-torique, usinée dans le support (4).

7.- Dispositif de serrage selon l'une des revendications précédentes caractérisé en ce que la susdite première aile (61) de la bride de serrage (60) comprend en outre une pluralité de perçages lisses (65) uniformément répartis autour de la circonférence de la bride (60) et en ce que la susdite seconde aile (63) comprend une pluralité de perçages taraudés (66) respectivement coaxiaux aux perçages lisses (65) ménagés sur la première aile et en ce que dans lesdits perçages taraudés (66) peuvent venir se visser des vis à tête (67) passant au travers des perçages lisses (65) correspondants de la première aile (61) ce vissage ayant pour effet de rapprocher les deux ailes (63, 61) l'une vers l'autre et de faciliter ainsi l'extraction de la butée fixée sur le support, par exemple le jonc.

8.- Dispositif de serrage selon l'une des revendications précédentes, caractérisé en ce que l'élément à serrer est un double joint torique flexible (17) constitué de deux structures de joint torique (19, 20) liées par une membrane souple (21) de section de révolution en forme de C dont les deux extrémités viennent en retour sur les deux structures de joint (19, 20) et dont l'âme présente une pliure (22) assurant une souplesse entre les deux structures de joint (19, 20) et en ce que la face antérieure (24) de la bride (25) présente en outre une cavité (26) permettant le libre débattement de la pliure (22).

9.- Dispositif de serrage selon l'une des revendications 1 à 6, caractérisé en ce que l'élément à serrer est un joint à talon (31, 32) sensiblement en forme de T inversé, et en ce que la face antérieure (34) de la bride (35) et la face frontale (36) de l'épaulement présentent des profils en palier délimitant une cavité de forme sensiblement complémentaire à celle du joint (31,32).

10.- Dispositif de serrage linéaire selon l'une des revendications 1, 2 et 7, caractérisé en ce que la bride (37), de forme linéaire, comprend, en outre, au bas de sa face antérieure, un talon de reprise (45) qui vient prendre appui dans une gorge (46) prévue à la base de la face frontale (39) du corps (40), de manière à maintenir la bride (37) en état d'équilibre.

1 / 4

0086314

Fig. 1

Fig. 2

Fig. 3

Fig. 4

Fig. 5

Fig. 6

**Fig. 8**

**Fig. 7**

Fig. 9

section A-A

Fig. 10

# EUROPEAN SEARCH REPORT

EP 82 40 0265.3

| | DOCUMENTS CONSIDERED TO BE RELEVANT | | | CLASSIFICATION OF THE APPLICATION (Int. Cl. ³) |
|---|---|---|---|---|
| Category | Citation of document with indication, where appropriate, of relevant passages | | Relevant to claim | |
| X | US – A – 2 766 502 (VON RANSON) <br> * fig. 2 * | | 1,2 | F 16 B 2/04 |
| Y | DE – C – 906 446 (MATUTTIES) <br> * fig. 1 à 3 * | | 1,2 | |
| Y | DE – A1 – 2 524 895 (MALBRANQUE SERSEG) <br> * fig. 1, 2 * | | 1,3-7 | |
| Y | DE – A1 – 2 848 130 (WESTAD ARMATURFABRIK) <br> * fig. 1 * | | 1,3-7 | **TECHNICAL FIELDS SEARCHED (Int.Cl. ³)** |
| Y | DE – U – 6 945 393 (ORSCHLER) <br> * fig. 2 * | | 1 | F 16 B 2/00 <br> F 16 K 1/00 <br> F 16 K 3/00 |
| Y | FR – A – 1 187 174 (CORBIN) <br> * fig. 2 * | | 1 | F 16 K 5/00 <br> F 16 K 15/00 |
| Y | FR – A – 2 000 838 (JANKOWSKI) <br> * fig. 1 * | | 1 | |
| Y | FR – A – 2 129 259 (NICOLAS) <br> * fig. 1 * | | 1 | **CATEGORY OF CITED DOCUMENTS** |
| Y | US – A – 3 068 030 (RANSOM) <br> * fig. 1 * | | 1 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| Y | US – A – 4 220 314 (LYNCH) <br> * fig. 3, 4 * | | 1 | |

| | | | &: member of the same patent family, corresponding document |
|---|---|---|---|
| X | The present search report has been drawn up for all claims | | |

| Place of search | Date of completion of the search | Examiner |
|---|---|---|
| Berlin | 20-08-1982 | ZAPP |

EPO Form 1503.1 06.78